(19) **Europäisches Patentamt / European Patent Office / Office européen des brevets**

(11) **EP 2 092 707 B1**

(12) **EUROPEAN PATENT SPECIFICATION**

(45) Date of publication and mention
of the grant of the patent:
**01.01.2014 Bulletin 2014/01**

(21) Application number: **07793205.1**

(22) Date of filing: **11.07.2007**

(51) Int Cl.:
***H04L 27/26*** (2006.01)

(86) International application number:
**PCT/KR2007/003358**

(87) International publication number:
**WO 2008/069391 (12.06.2008 Gazette 2008/24)**

(54) **Apparatus and method of detecting timing synchronization for fast fourier transform**

Vorrichtung und Verfahren zum Detektieren der Timing-Synchronisation für die schnelle
Fouriertransformation

Appareil et procédé de détection de la synchronisation de temporisation pour la transformée de fourier
rapide

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **05.12.2006 KR 20060122548**

(43) Date of publication of application:
**26.08.2009 Bulletin 2009/35**

(73) Proprietor: **Electronics and Telecommunications
Research Institute
Yusong-gu, Daejeon-city 305-350 (KR)**

(72) Inventors:
• **KANG, Yeonsu
Daegu-city 702-052 (KR)**

• **KANG, Kunseok
Daejeon-city 305-804 (KR)**
• **AHN, Do-Seob
Daejeon-city 305-762 (KR)**
• **LEE, Ho-Jin
Daejeon-city 305-761 (KR)**

(74) Representative: **Betten & Resch
Theatinerstrasse 8
80333 München (DE)**

(56) References cited:
**US-B1- 6 487 252     US-B2- 7 023 817**

## Description

### Technical Field

The present invention relates to an apparatus and method of detecting timing synchronization for fast Fourier transform (FFT), and more particularly, to an apparatus and method of detecting timing synchronization capable of detecting a proper time point to fast-Fourier- transform in a system using an orthogonal frequency division multiplexing (OFDM) transmission scheme.

### Background Art

In an orthogonal frequency division multiplexing (OFDM) transmission scheme, data having a long symbol period is transmitted on a plurality of sub-carriers in parallel. It is advantageous that the OFDM scheme has high frequency usage efficiency, is robust against inter-symbol interference (ISI) that is a main problem in high speed communication, and converts frequency-selective fading into non-selective fading. Accordingly, the OFDM transmission scheme has been widely used in a wireless local area network (WLAN), a terrestrial digital multimedia broadcasting (DMB), and a digital broadcasting, and is considered as a method for a next generation mobile communication.

In order to implement the advantages of the OFDM transmission method, a transmitter performs an inverse fast fourier transform (IFFT) to transmit signals, and a receiver receives the transmitted signals and performs an FFT for a proper interval to recover the signals. Therefore, in order to maintain characteristics robust against ISI and inter-carrier interference (ICI) in the OFDM transmission method, it is very important to find a proper FFT time point.

Document US 6,487,252 B1 describes an orthogonal frequency division multiplexed wideband communication system which provides improved time and frequency synchronization by inserting an unevenly spaced pilot sequence within the constellation data. A receiver correlates the received data using the unevenly spaced pilot sequence. The pilot sequence is generated with a maximum length pseudo random noise code and inserted into frequency bins having prime numbers.

### Disclosure of Invention

### Technical Problem

The present invention provides an apparatus and method of detecting timing synchronization by using a training symbol which is known to both a transmitter and a receiver such as a preamble or a pilot in orthogonal frequency division multiplexing (OFDM) transmission signals.

### Technical Solution

The invention is defined in the independent claims.

According to an aspect, there is provided an apparatus for detecting timing synchronization including: a first sequence generator generating a plurality of first data sequences using a received signal; and a synchronization unit correlating the first data sequences with input second data sequences and determining a time point to perform a fast Fourier transform (FFT) on the received signal using the correlated results.

According to another aspect, there is provided a method of detecting timing synchronization including: generating a plurality of first data sequences using a received signal; correlates the first data sequences with input second data sequences; and determining a time point to perform an FFT operation on the received signal using the correlates results.

### Advantageous Effects

Accordingly, an accurate timing synchronization can be implemented for all of OFDM transmission systems for detecting timing synchronization for an FFT. In particular, considering that a performance of an existing timing synchronization method is determined by construction characteristics of the preambles, an accurate timing synchronization construction can be implemented in the present invention without being influenced largely by a construction scheme of the preambles. Therefore, even when timing synchronization performance of a standardized system is not good, accurate timing synchronization can be implemented without changing a training symbol defined in the standard.

The present invention may also be applied to signal acquisition of a burst mode OFDM modem. In addition, the present invention performs the accurate timing synchronization to improve performance of the receiver and can be applied regardless of characteristics of a training symbol, so that it is possible to increase a degree of design freedom of the training symbol.

**Description of Drawings**

The above and other features and advantages of the present invention will become more apparent by describing in detail exemplary embodiments thereof with reference to the attached drawings in which:

FIG. 1 is a block diagram illustrating an apparatus for detecting timing synchronization according to an embodiment of the present invention;
FIG. 2 is a detailed block diagram illustrating a robust sequence generator shown in FIG. 1;
FIGS. 3A and 3B illustrate embodiments of a circular shift mapping method;
FIG. 4 is a block diagram of a pseudo preamble generator provided to a synchronization unit shown in FIG. 1;
FIG. 5 is a detailed block diagram of a synchronization unit shown in FIG.1; and
FIG. 6 illustrates a timing metric obtained for samples according to Equation 4.

**Mode for Invention**

Hereinafter, exemplary embodiments of the present invention will be described in detail with reference to the attached drawings.

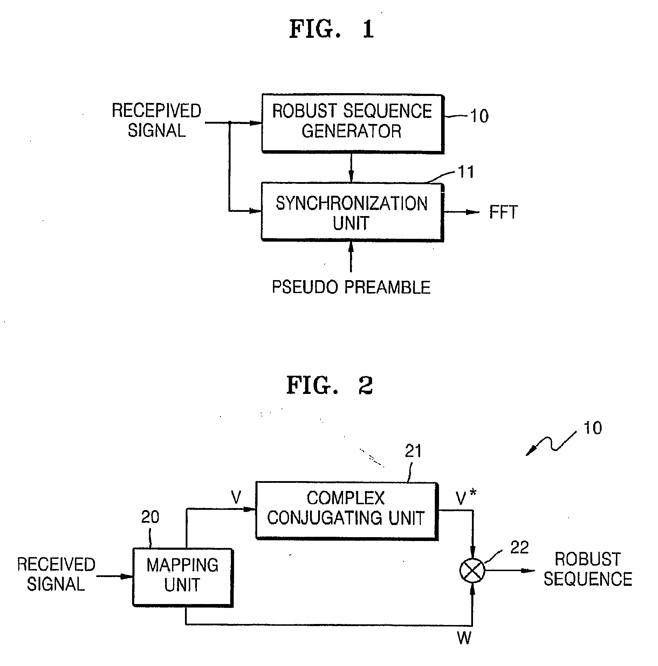

FIG. 1 is a block diagram illustrating an apparatus for detecting timing synchronization according to an embodiment of the present invention.

The apparatus for detecting timing synchronization illustrated in FIG. 1, which is included in an orthogonal frequency division multiplexing (OFDM) receiver, includes a robust sequence generator 10 and a synchronization unit 11.

The robust sequence generator 10 receives n consecutive samples of a training symbol in a received signal and generates a new sequence having a robust characteristic in a wireless channel environment.

The synchronization unit 11 measures power of the received signal and detects a proper time point to perform a fast Fourier transform (FFT) on the received signal using the measured power and a pseudo preamble. Here, a unit for generating the pseudo preamble may be directly implemented in the receiver. Alternatively, the pseudo preamble may be generated by a pseudo preamble generating process in advance and stored to a storage unit (not shown), since the pseudo preamble has unique values according to the training symbol. If the receiver uses the values stored in the storage unit, it is advantageous that complexity and amounts of operation of the receiver can be reduced.

FIG. 2 is a detailed block diagram of the robust sequence generator 10.

The robust sequence generator 10 includes a mapping unit 20, a complex conjugating unit 21, and a multiplying unit 22.

The mapping unit 20 maps a received signal having a length of n according to a predetermined pattern to generate two sequences V and W having a length of L (here, $n \geq L$). In the present embodiment, the mapping operation is performed according to conditions as follows.

1. The two sequences V and W, the mapped results, are constructed by using only an input sequence.
2. An element included in the input sequence can exist in the two sequences V and W simultaneously.
3. A value of an element included in the input sequence can exist in the sequence V or W two or more times repeatedly.
4. Lengths of the two sequences V and W are the same.

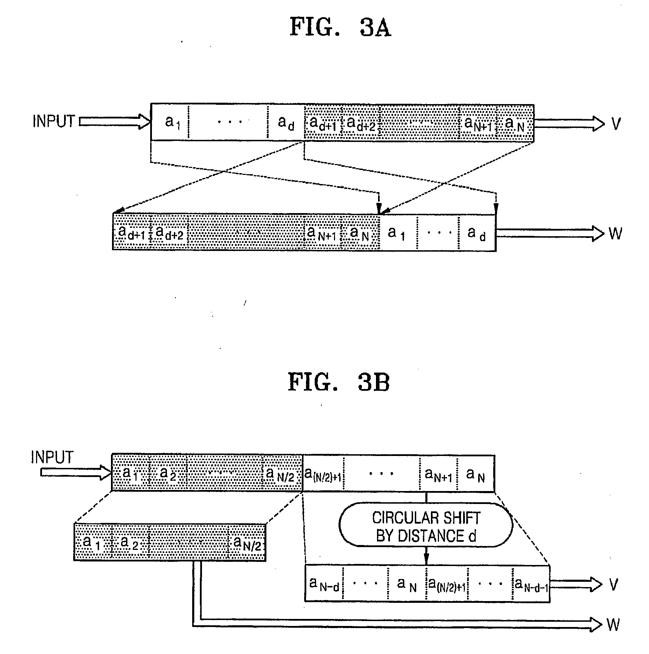

FIGS. 3A and 3B illustrate exemplified circular shift mapping methods. According to the circular shift method shown in FIG. 3A, one of the output sequences is a sequence obtained by outputting the input sequence as it is, and the other is a sequence obtained by circularly shifting the input sequence by a predetermined distance d. In this case, even though the same input sequence is used, sequences having different characteristics can be generated according to the shifting distance d.

According to the circular shift method shown in FIG. 3B, one of the output sequences is a sequence obtained by outputting a half of the input sequence as it is, and the other is a sequence obtained by circularly shifting the other half of the input sequence by a distance d.

The complex conjugating unit 21 performs a complex conjugate operation on one of the two sequences which are the mapped results, and the multiplying unit 22 multiplies the complex conjugated sequence by the other of the two sequences to generate a robust sequence C=V x W having a length of L. Here, the complex conjugate operation is performed on only one of the two sequences, since channel distortion is represented as power of the channel and then the transmitted training symbol can maintain its characteristics after passing through a wireless channel.

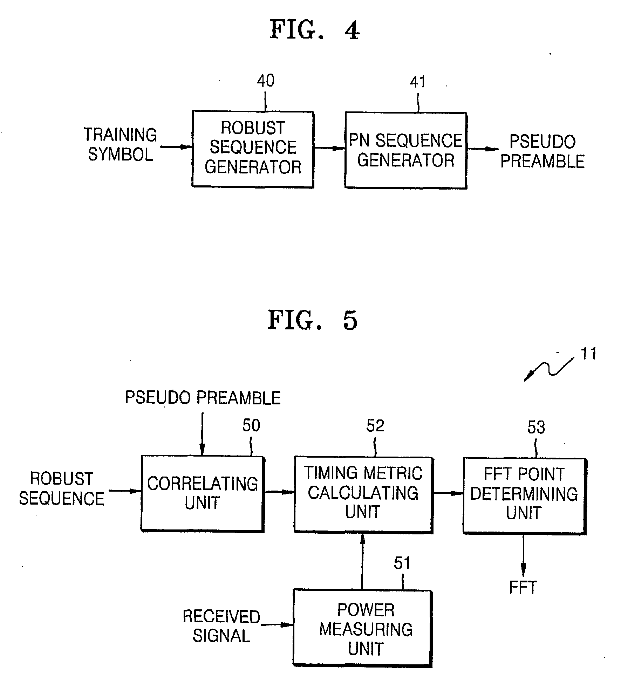

FIG. 4 is a block diagram of a pseudo preamble generator provided to the synchronization unit 11 shown in FIG. 1.

The pseudo preamble generator shown in FIG. 4 includes a robust sequence generator 40 and may further include a pseudo-noise (PN) sequence generator 41.

The robust sequence generator 40 is the same as the robust sequence generator 10 shown in FIGS. 1 and 2 but has a different input data sequence. More specifically, the input of the robust sequence generator 10 in FIG. 1 is the received signal, while an input of the robust sequence generator 40 in FIG. 4 is the training symbol or the preamble.

A mapping operation may be performed by using the circular shift method exemplified FIG. 3A or 3B, and when a circular shift distance is d, the mapping operation of the robust sequence generator 10 included in the receiver also has to use the circular shift method having the same shift distance d.

Here, if required, the pseudo preamble can be employed as a robust sequence. However, in consideration of complexity of the receiver, it may be efficient to employ an output of the PN sequence generator 41 as the pseudo preamble.

The PN sequence generator 41 performs an operation as following Equation 1 on an input robust sequence C to generate PN sequences P and Q, that is, the pseudo preambles.

[Equation 4]

$$P(a) = \begin{cases} 1, & \text{if a sign of } \mathrm{Re}\{C(a)\} \geq 0 \\ -1 & \text{otherwise} \end{cases}, \quad 1 \leq a \leq L$$

$$Q(a) = \begin{cases} 1 & \text{if a sign of } \mathrm{Im}\{C(a)\} \geq 0 \\ -1 & \text{otherwise} \end{cases}, \quad 1 \leq a \leq L$$

The synchronization unit 11 in FIG 1 measures power of the received signal and detects timing synchronization using the measured power, the pseudo preamble, and the robust sequence output from the robust sequence generator 10.

FIG 5 is a detailed block diagram of the synchronization unit 11. The synchronization unit 11 includes a correlating unit 50, a power measuring unit 51, a timing metric calculating unit 52, and an FFT point determining unit 53.

The correlating unit 50 calculates G(k) representing correlation between the PN sequences P and Q generated by the PN sequence generator 41 and the robust sequence C which is the output of the robust sequence generator 10 being input the received signal as follows.

[Equation 2]

$$G(k) = \sum_{a=1}^{L} \left[ P(a) \cdot \mathrm{Re}\{C(k+a-1)\} + Q(a) \, \mathrm{Im}\{C(k+a-1)\} \right]$$

Here, Re {C} and Im{C} denote a real component and an imaginary component of the C, respectively. In addition, k denotes a sampling index of the received signal.

The power measuring unit 51 measures the power E(k) for n-samples of the received signal r(k) as follows.

[Equation 3]

$$E(k) = \sum_{a=1}^{N} |r(k+a)|^2$$

The timing metric calculating unit 52 calculates a timing metric using the correlated result of the correlating unit 50 and the power measured by the power measuring unit 51 as follows.

[Equation 4]

$$M(k) = \frac{G(k)}{E(k)}$$

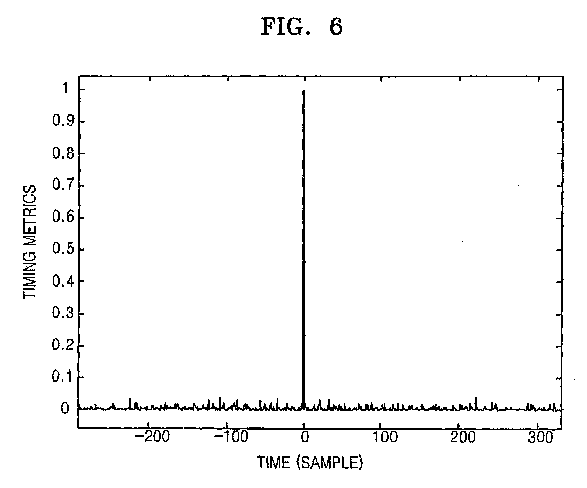

FIG 6 illustrates timing metrics obtained for the samples according to Equation 4. Referring to FIG. 6, the timing metrics have an impulse shape, so that timing synchronization can be performed with a high performance.

The FFT point determining unit 53 determines an FFT point based on the timing metrics obtained for the samples for a predetermined interval. Preferably, a sample point having the maximum timing metric may be determined as the FFT operation time point.

In the timing synchronization method, the mapping operation can output a plurality of sequences, not limited to the two sequences. In this case, the correlating unit 50 has to be able to reflect correlations between a plurality of pseudo preambles and a robust sequence, and the timing metric calculating unit 53 has to be able to reflect the correlations.

For example, when the plurality of mapping outputs are 3, namely, V,W and X, the robust sequence generating unit 10 can generate robust sequences for different two outputs (W,X), (V,X), (W,V) as follows.

[Equation 5]

$$C_{WX}(K) = W^* \cdot X(K)$$
$$C_{VX}(K) = V^* \cdot X(K)$$
$$C_{VW}(K) = V^* \cdot W(K)$$

The PN sequence generating unit 41 generates 6 PN sequences of ($P_{WX}$, $P_{VX}$, $P_{VW}$), (Qwx, $Q_{VX}$, Qvw) corresponding to three robust sequences ($C_{WX}$, $C_{VX}$, $C_{VW}$), respectively, and the 6 PN sequences become the pseudo preambles.

The correlating unit 50 calculates correlations by using the three robust sequences and the corresponding six pseudo preambles.

While the present invention has been particularly shown and described with reference to exemplary embodiments thereof, it will be understood by those skilled in the art that various changes in form and details may be made therein without departing from the scope of the present invention as defined by the appended claims.

**Claims**

1. An apparatus for detecting timing synchronization comprising:

   a first sequence generator (10) adapted to generate a plurality of first data sequences using a received signal; and
   a synchronization unit (11) adapted to correlate the first data sequences with input second data sequences and determine a time point to fast-Fourier-transform the received signal using the correlated results; **characterized in that**
   the first sequence generator (10) comprises:

   a mapping unit (20) adapted to extract a part of the received signal and construct a plurality of third data sequences using only the part of the received signal; forming combinations of two of the third data sequences, whereby an element included in the part of the received signal simultaneously exists in each of the two third data sequences in each combination;
   a complex conjugating unit (21) adapted to perform a complex conjugate operation on one of the third data sequences in each of said combinations; and
a multiplying unit (22) adapted to multiply the complex conjugated third data sequence in each combination by the other third data sequence in the same combination and to output the results as the first data sequences;

wherein the second data sequences are generated by:

a second sequence generator (40), performing the same sequence generating operations as the first sequence generator (10) but adapted to generate a plurality of fourth data sequences using a predetermined third data sequence; and

a third sequence generator (41) adapted to generate the second data sequences corresponding to real components and imaginary components of the fourth data sequences, respectively, using the fourth data sequences;

wherein the second sequence generator (40) comprises:

a mapping unit (20) adapted to construct a plurality of fifth data sequences using only the predetermined third data sequence, forming combinations of two of the fifth data sequences, whereby an element included in predetermined third data sequence simultaneously exists in each of the two fifth data sequences in each combination;

a complex conjugating unit (21) adapted to perform a complex conjugate operation on one of the fifth data sequences in each of said combinations; and

a multiplying unit (22) adapted to multiply the complex conjugated fifth data sequence in each combination by the other fifth data sequence in the same combination to output the results as the fourth data sequences.

2. The apparatus of claim 1, wherein the mapping unit (20) is adapted to output the part of the received signal without change as one of the third data sequences and circularly shifts the part of the received signal by a distance which is shorter than a length of the first data sequences to output as another third data sequence.

3. The apparatus of claim 1, wherein the mapping unit (20) outputs a half of the part of the received signal without change as one of the third data sequences and circularly shifts another half of the part of the received signal by a distance which is shorter than a length of the half of the part of the received signal to output as another third data sequence.

4. The apparatus of claim 1, wherein the mapping unit (20) is adapted to output the part of the third data sequence without change as one of the fifth data sequences and circularly shifts the part of the third data sequence by a distance which is shorter than a length of the first data sequence to output as another fifth data sequence.

5. The apparatus of claim 1, wherein the mapping unit (20) is adapted to output- a half of the part of the third data sequence without change as one of the fifth data sequences and circularly shifts another half of the third data sequence by a distance which is shorter than a length of the half of the part of the third data sequence to output as another fifth data sequence.

6. A method of detecting timing synchronization comprising:

generating a plurality of first data sequences using a received signal;
correlating the first data sequences with input second data sequences; and
determining a time point to perform an FFT operation on the received signal using the correlated results; **characterized in that**
the first sequences are generated by:

extracting a part of the received signal and construct a plurality of third data sequences using only the part of the received signal;
forming combinations of two of the third data sequences, whereby an element included in the part of the received signal simultaneously exists in each of the two third data sequences in each combination;
performing a complex conjugate operation on one of the third data sequences in each of said combinations; and
multiplying the complex conjugated third data sequence in each combination by the other third data sequence in the same combination and to output the results as the first data sequences;

wherein the second data sequences are generated by:

generating a plurality of fourth data sequences using a predetermined third data sequence; and
generating the second data sequences corresponding to real components and imaginary components of the fourth data sequences, respectively, using the fourth data sequences

the generating the fourth data sequences comprises:

constructing a plurality of fifth data sequences using only the predetermined third data sequence, forming combinations of two of the fifth data sequences, whereby an element included in predetermined third data sequence simultaneously exists in each of the two fifth data sequences in each combination; performing a complex conjugate operation on one of the fifth data sequences in each of said combinations; and
multiplying the complex conjugated fifth data sequence in each combination by the other fifth data sequence in the same combination to output the results as the fourth data sequences.

**Patentansprüche**

1.  Vorrichtung zum Detektieren einer Zeitsteuerungssynchronisation, die umfasst:

einen ersten Sequenzgenerator (10), der dafür ausgelegt ist, mehrere erste Datensequenzen unter Verwendung eines empfangenen Signals zu erzeugen; und
eine Synchronisationseinheit (11), die dafür ausgelegt ist, die ersten Datensequenzen mit eingegebenen zweiten Datensequenzen zu korrelieren und unter Verwendung der korrelierten Ergebnisse einen Zeitpunkt zu bestimmen, um das empfangene Signal einer schnellen Fourier-Transformation zu unterwerfen; **dadurch gekennzeichnet, dass**
der erste Sequenzgenerator (10) umfasst:

eine Abbildungseinheit (20), die dafür ausgelegt ist, einen Abschnitt des empfangenen Signals zu extrahieren und mehrere dritte Datensequenzen unter Verwendung lediglich des Abschnitts des empfangenen Signals zu konstruieren; und Kombinationen aus zwei der drei Datensequenzen zu bilden, wodurch ein in dem Abschnitt des empfangenen Signals enthaltenes Element gleichzeitig in jeder der zwei dritten Datensequenzen in jeder Kombination vorhanden ist;
eine Komplexkonjugationseinheit (21), die dafür ausgelegt ist, eine Komplexkonjugationsoperation an einer der dritten Datensequenzen in jeder der Kombinationen auszuführen; und
eine Multiplikationseinheit (22), die dafür ausgelegt ist, die komplexkonjugierte dritte Datensequenz in jeder Kombination mit der anderen dritten Datensequenz in derselben Kombination zu multiplizieren und die Ergebnisse als die ersten Datensequenzen auszugeben;

wobei die zweiten Datensequenzen erzeugt werden durch:

einen zweiten Sequenzgenerator (40), um dieselben Sequenzerzeugungsoperationen wie der erste Sequenzgenerator (10) auszuführen, der jedoch ausgelegt ist, um mehrere vierte Datensequenzen unter Verwendung einer vorgegebenen dritten Datensequenz zu erzeugen; und
einen dritten Sequenzgenerator (41), der dafür ausgelegt ist, die zweiten Datensequenzen, die reellen Komponenten bzw. imaginären Komponenten der vierten Datensequenzen entsprechen, unter Verwendung der vierten Datensequenzen zu erzeugen;

wobei der zweite Sequenzgenerator (40) umfasst:

eine Abbildungseinheit (20), die dafür ausgelegt ist, mehrere fünfte Datensequenzen unter Verwendung lediglich der vorgegebenen dritten Datensequenz zu konstruieren und Kombinationen aus zwei der fünften Datensequenzen zu bilden, wodurch ein in der vorgegebenen dritten Datensequenz enthaltenes Element gleichzeitig in jeder der zwei fünften Datensequenzen in jeder Kombination vorhanden ist;
eine Komplexkonjugationseinheit (21), die dafür ausgelegt ist, eine Komplexkonjugationsoperation an einer der fünften Datensequenzen in jeder der Kombinationen auszuführen; und
eine Multiplikationseinheit (22), die dafür ausgelegt ist, die komplexkonjugierte fünfte Datensequenz in jeder Kombination mit der anderen fünften Datensequenz in derselben Kombination zu multiplizieren, um die Ergebnisse als die vierten Datensequenzen auszugeben.

2. Vorrichtung nach Anspruch 1, wobei die Abbildungseinheit (20) dafür ausgelegt ist, den Abschnitt des empfangenen Signals ohne Änderung als eine der dritten Datensequenzen auszugeben, und den Abschnitt des empfangenen Signals um eine Strecke zirkulär verschiebt, die kürzer ist als eine Länge der ersten Datensequenzen, um ihn als eine weitere dritte Datensequenz auszugeben.

3. Vorrichtung nach Anspruch 1, wobei die Abbildungseinheit (20) eine Hälfte des Abschnitts des empfangenen Signals ohne Änderung als eine der dritten Datensequenzen ausgibt und eine weitere Hälfte des Abschnitts des empfangenen Signals um eine Strecke zirkulär verschiebt, die kürzer ist als eine Länge der Hälfte des Abschnitts des empfangenen Signals, um ihn als weitere dritte Datensequenz auszugeben.

4. Vorrichtung nach Anspruch 1, wobei die Abbildungseinheit (20) dafür ausgelegt ist, den Abschnitt der dritten Datensequenz ohne Änderung als eine der fünften Datensequenzen auszugeben, und den Abschnitt der dritten Datensequenz um eine Strecke zirkulär verschiebt, die kürzer ist als eine Länge der ersten Datensequenz, um ihn als eine weitere fünfte Datensequenz auszugeben.

5. Vorrichtung nach Anspruch 1, wobei die Abbildungseinheit (20) dafür ausgelegt ist, eine Hälfte des Abschnitts der dritten Datensequenz ohne Änderung als eine der fünften Datensequenzen auszugeben, und eine weitere Hälfte der dritten Datensequenz um eine Strecke zirkulär verschiebt, die kürzer ist als eine Länge der Hälfte des Abschnitts der dritten Datensequenz, um ihn als eine weitere fünfte Datensequenz auszugeben.

6. Verfahren zum Detektieren einer Zeitsteuerungssynchronisation, das umfasst:

Erzeugen mehrerer erster Datensequenzen unter Verwendung eines empfangenen Signals;
Korrelieren der ersten Datensequenzen mit eingegebenen zweiten Datensequenzen; und
Bestimmen eines Zeitpunkts, um an dem empfangenen Signal eine FFT-Operation auszuführen, indem die korrelierten Ergebnisse verwendet werden; **dadurch gekennzeichnet, dass**
die ersten Sequenzen erzeugt werden durch:

Extrahieren eines Abschnitts des empfangenen Signals und Konstruieren mehrerer dritter Datensequenzen unter Verwendung nur des Abschnitts des empfangenen Signals;
Bilden von Kombinationen aus zwei der dritten Datensequenzen, wodurch ein in dem Abschnitt des empfangenen Signals enthaltenes Element gleichzeitig in jeder der zwei dritten Datensequenzen in jeder Kombination vorhanden ist;
Ausführen einer Komplexkonjugationsoperation an einer der dritten Datensequenzen in jeder dieser Kombinationen; und
Multiplizieren der komplexkonjugierten dritten Datensequenz in jeder Kombination mit der anderen dritten Datensequenz in derselben Kombination und Ausgeben der Ergebnisse als die dritten Datensequenzen;

wobei die zweiten Datensequenzen erzeugt werden durch:

Erzeugen mehrerer vierter Datensequenzen unter Verwendung einer vorgegebenen dritten Datensequenz; und
Erzeugen der zweiten Datensequenzen, die reellen Komponenten bzw. imaginären Komponenten der vierten Datensequenzen entsprechen, unter Verwendung der vierten Datensequenzen;

wobei das Erzeugen der vierten Datensequenzen umfasst:

Konstruieren mehrerer fünfter Datensequenzen unter Verwendung nur der vorgegebenen dritten Datensequenz,
Bilden von Kombinationen aus zwei der fünften Datensequenzen, wodurch ein in der vorgegebenen dritten Datensequenz enthaltenes Element gleichzeitig in jeder der zwei fünften Datensequenzen in jeder Kombination vorhanden ist;
Ausführen einer Komplexkonjugationsoperation an einer der fünften Datensequenzen in jeder der Kombinationen; und
Multiplizieren der komplexkonjugierten fünften Datensequenz in jeder Kombination mit der anderen fünften Datensequenz in derselben Kombination, um die Ergebnisse als die vierten Datensequenzen auszugeben.

**Revendications**

1. Appareil pour détecter une synchronisation de cadencement comprenant :

un premier générateur de séquence (10) adapté pour générer une pluralité de premières séquences de données en utilisant un signal reçu ; et

une unité de synchronisation (11) adaptée pour corréler les premières séquences de données avec des deuxièmes séquences de données d'entrée et déterminer un point temporel pour une transformée de Fourier rapide du signal reçu en utilisant les résultats corrélés ; **caractérisé en ce que**

le premier générateur de séquence (10) comprend :

une unité de mappage (20) adaptée pour extraire une partie du signal reçu et construire une pluralité de troisièmes séquences de données en utilisant uniquement la partie du signal reçu ; formant des combinaisons de deux des troisièmes séquences de données, moyennant quoi un élément compris dans la partie du signal reçu existe simultanément dans chacune des deux troisièmes séquences de données dans chaque combinaison ;

une unité de conjugaison complexe (21) adaptée pour effectuer une opération de conjugaison complexe sur une des troisièmes séquences de données dans chacune desdites combinaisons ; et

une unité de multiplication (22) adaptée pour multiplier la troisième séquence de données ayant fait l'objet de la conjugaison complexe dans chaque combinaison par l'autre troisième séquence de données dans la même combinaison et pour sortir les résultats comme les premières séquences de données ;

dans lequel les deuxièmes séquences de données sont générées par :

un deuxième générateur de séquence (40), effectuant les mêmes opérations de génération de séquence que le premier générateur de séquence (10) mais adapté pour générer une pluralité de quatrièmes séquences de données en utilisant une troisième séquence de données prédéterminée ; et

un troisième générateur de séquence (41) adapté pour générer les deuxièmes séquences de données correspondant à des composantes réelles et des composantes imaginaires des quatrièmes séquences de données, respectivement, en utilisant les quatrièmes. séquences de données ;

dans lequel le deuxième générateur de séquence (40) comprend :

une unité de mappage (20) adaptée pour construire une pluralité de cinquièmes séquences de données en utilisant uniquement la troisième séquence de données prédéterminée, formant des combinaisons de deux des cinquièmes séquences de données, moyennant quoi un élément compris dans la troisième séquence de données prédéterminée existe simultanément dans chacune des deux cinquièmes séquences de données dans chaque combinaison ;

une unité de conjugaison complexe (21) adaptée pour effectuer une opération de conjugaison complexe sur une des cinquièmes séquences de données dans chacune desdites combinaisons ; et

une unité de multiplication (22) adaptée pour multiplier la cinquième séquence de données ayant fait l'objet de la conjugaison complexe dans chaque combinaison par l'autre cinquième séquence de données dans la même combinaison pour sortir les résultats comme les quatrièmes séquences de données.

2. Appareil selon la revendication 1, dans lequel l'unité de mappage (20) est adaptée pour sortir la partie du signal reçu sans changement comme une des troisièmes séquences de données et décale circulairement la partie du signal reçu d'une distance qui est plus courte qu'une longueur des premières séquences de données pour sortir comme une autre troisième séquence de données.

3. Appareil selon la revendication 1, dans lequel l'unité de mappage (20) sort une moitié de la partie du signal reçu sans changement comme une des troisièmes séquences de données et décale circulairement une autre moitié de la partie du signal reçu d'une distance qui est plus courte qu'une longueur de la moitié de la partie du signal reçu pour sortir comme une autre troisième séquence de données.

4. Appareil selon la revendication 1, dans lequel l'unité de mappage (20) est adaptée pour sortir la partie de la troisième séquence de données sans changement comme une des cinquièmes séquences de données et décale circulairement la partie de la troisième séquence de données d'une distance qui est plus courte qu'une longueur de la première séquence de données pour sortir comme une autre cinquième séquence de données.

5. Appareil selon la revendication 1, dans lequel l'unité de mappage (20) est adaptée pour sortir une moitié de la partie de la troisième séquence de données sans changement comme une des cinquièmes séquences de données et décale circulairement une autre moitié de la troisième séquence de données d'une distance qui est plus courte qu'une longueur de la moitié de la partie de la troisième séquence de données pour sortir comme une autre cinquième séquence de données.

6. Procédé de détection de synchronisation de cadencement comprenant :

la génération d'une pluralité de premières séquences de données en utilisant un signal reçu ;
la corrélation des premières séquences de données avec des deuxièmes séquences de données d'entrée ; et
la détermination d'un point temporel pour effectuer une opération FFT sur le signal reçu en utilisant les résultats corrélés ; **caractérisé en ce que**
les premières séquences sont générées par :

l'extraction d'une partie du signal reçu et la construction d'une pluralité de troisièmes séquences de données en utilisant uniquement la partie du signal reçu ;
la formation de combinaisons de deux des troisièmes séquences de données, moyennant quoi un élément compris dans la partie du signal reçu existe simultanément dans chacune des deux troisièmes séquences de données dans chaque combinaison ;
l'exécution d'une opération de conjugaison complexe sur une des troisièmes séquences de données dans chacune desdites combinaisons ; et
la multiplication de la troisième séquence de données ayant fait l'objet de la conjugaison complexe dans chaque combinaison par l'autre troisième séquence de données dans la même combinaison et la sortie des résultats comme les premières séquences de données ;

dans lequel les deuxièmes séquences de données sont générées par :

la génération d'une pluralité de quatrièmes séquences de données en utilisant une troisième séquence de données prédéterminée ; et
la génération des deuxièmes séquences de données correspondant à des composantes réelles et des composantes imaginaires des quatrièmes séquences de données, respectivement, en utilisant les quatrièmes séquences de données ;

la génération des quatrièmes séquences de données comprend :

la construction d'une pluralité de cinquièmes séquences de données en utilisant uniquement la troisième séquence de données prédéterminée,
la formation de combinaisons de deux des cinquièmes séquences de données, moyennant quoi un élément compris dans la troisième séquence de données prédéterminée existe simultanément dans chacune des deux cinquièmes séquences de données dans chaque combinaison ;
l'exécution d'une opération de conjugaison complexe sur une des cinquièmes séquences de données dans chacune desdites combinaisons ; et
la multiplication de la cinquième séquence de données ayant fait l'objet de la conjugaison complexe dans chaque combinaison par l'autre cinquième séquence de données dans la même combinaison pour sortir les résultats comme les quatrièmes séquences de données.

# FIG. 1

RECEPIVED SIGNAL → ROBUST SEQUENCE GENERATOR ─10

ROBUST SEQUENCE GENERATOR → SYNCHRONIZATION UNIT ─11

SYNCHRONIZATION UNIT → FFT

PSEUDO PREAMBLE → SYNCHRONIZATION UNIT

# FIG. 2

10

RECEIVED SIGNAL → MAPPING UNIT (20)

MAPPING UNIT → V → COMPLEX CONJUGATING UNIT (21) → V*

V* → ⊗ (22) → ROBUST SEQUENCE

W

FIG. 3A

FIG. 3B

# FIG. 4

TRAINING SYMBOL → ROBUST SEQUENCE GENERATOR (40) → PN SEQUENCE GENERATOR (41) → PSEUDO PREAMBLE

# FIG. 5

11

PSEUDO PREAMBLE

ROBUST SEQUENCE → CORRELATING UNIT (50) → TIMING METRIC CALCULATING UNIT (52) → FFT POINT DETERMINING UNIT (53) → FFT

RECEIVED SIGNAL → POWER MEASURING UNIT (51)

## FIG. 6

**EP 2 092 707 B1**

**Patent documents cited in the description**

- US 6487252 B1